# EUROPÄISCHE PATENTANMELDUNG

(11) **EP 4 353 450 A1**
(43) Veröffentlichungstag der Anmeldung: **17.04.2024**
(21) Anmeldenummer: 22201264.3
(22) Anmeldetag: 13.10.2022
(51) Int. Cl.: B29C 64/245, B29C 64/106, B22F 12/00, B22F 12/33, B29C 64/176, B29C 64/232, B29C 64/236, B29C 64/25, B29C 64/295, B33Y 30/00

(54) **VORRICHTUNG ZUR ADDITIVEN FERTIGUNG**

(71) Anmelder: SOMIC Verpackungsmaschinen GmbH & Co. KG, 83123 Amerang (DE)
(72) Erfinder: KÖGEL, Christoph, 83128 Prutting (DE)
(74) Vertreter: Weickmann & Weickmann PartmbB

(57) **Zusammenfassung**

Die Erfindung betrifft eine Vorrichtung (100) zur additiven Fertigung eines nicht zur Vorrichtung (100) gehörenden Bauteils (110). Die Vorrichtung (100) umfasst eine in Magnetschwebetechnologie ausgebildete Druckbetteinheit (102) mit einer Statoranordnung (104) und wenigstens einem Mover (106). Ferner umfasst die Vorrichtung (100) eine Druckkopfeinheit (108), die dazu eingerichtet ist, ein zur Bildung des Bauteils (110) bestimmtes Material (112) auf eine Druckfläche (114) aufzutragen. Erfindungsgemäß ist die Druckfläche (114) auf einer der Druckkopfeinheit (108) zugewandten Oberfläche (106a) des wenigstens einen Movers (106) ausgebildet.

## Beschreibung

Die Erfindung betrifft eine Vorrichtung zur additiven Fertigung eines nicht zur Vorrichtung gehörenden Bauteils, umfassend eine in Magnetschwebetechnologie ausgebildete Druckbetteinheit mit einer Statoranordnung und wenigstens einem Mover, wobei die Statoranordnung eine Bewegungsfläche aufweist, relativ zu der der wenigstens eine Mover bewegbar ist, und eine Druckkopfeinheit, die dazu eingerichtet ist, ein zur Bildung des Bauteils bestimmtes Material auf eine Druckfläche aufzutragen.

Eine derartige Vorrichtung zur additiven Fertigung ist aus der gattungsbildenden US 2020/0030995 A1 bekannt. Bei dieser Vorrichtung sind mehrere Mover über einen komplexen Verbindungskörper miteinander verbunden, auf dem die Druckfläche ausgebildet ist. Der Verbindungskörper weist eine aufwändige Konstruktion auf, mit der die Mover verbunden werden und die Relativbewegung zwischen den Movern eingeschränkt wird, beziehungsweise diese ausgleicht. Die aus der US 2020/0030995 A1 bekannte Vorrichtung zur additiven Fertigung eines Bauteils ist daher kostenintensiv, und die synchronisierte Steuerung mehrerer Mover ist aufwändig und komplex. Aufgrund ihrer Höhe kann sich die Konstruktion verbiegen, was zu größeren Ungenauigkeiten der Positionierung der Druckfläche und/oder des zu fertigenden Bauteils führen kann als bei anderen bekannten Vorrichtungen.

Aus der EP 3 290 187 A1 ist eine weitere Vorrichtung für die additive Fertigung eines Bauteils bekannt, die einen Supraleiter umfasst, der über ein, bedingt durch den Supraleiter, eingefrorenes Magnetfeld in horizontaler Richtung fest mit einem Magnetfeldgenerator gekoppelt ist. Für eine Bewegung in horizontaler Richtung sind gesonderte Mittel vorgesehen, die den Magnetfeldgenerator und damit den Supraleiter und die Druckfläche bewegen. Somit ist diese Vorrichtung aufwändig und kostenintensiv und weist ein hohes Gewicht auf.

Aufgabe der vorliegenden Erfindung ist es, eine Vorrichtung zur additiven Fertigung mit vereinfachtem Aufbau bereitzustellen.

Diese Aufgabe wird durch eine gattungsgemäße Vorrichtung gelöst, bei der die Druckfläche auf einer der Druckkopfeinheit zugewandten Oberfläche des wenigstens einen Movers ausgebildet ist.

Dadurch, dass die Druckfläche direkt auf einer Oberfläche des wenigstens einen Movers ausgebildet ist, weist die Vorrichtung einen vereinfachten Aufbau auf. Ferner können die Gestehungskosten der Vorrichtung reduziert werden. Da lediglich der wenigstens eine Mover und die Druckkopfeinheit anzusteuern sind, kann zudem der Steuerungsaufwand verringert werden. Der wenigstens eine Mover und damit auch die Druckfläche können sehr präzise und flexibel auf der Bewegungsfläche und somit relativ zur Druckkopfeinheit positioniert werden. Dementsprechend entfällt auch ein aufwändiges Justieren der Druckfläche zu einem Vorrichtungsnullpunkt. Somit können die Durchlaufzeiten und Handlingszeiten reduziert werden.

An dieser Stelle sei darauf hingewiesen, dass sich der Mover auf der Bewegungsfläche sowohl in horizontaler Richtung als auch in vertikaler Richtung bewegen kann. Mit horizontaler Richtung ist jede Richtung bezeichnet, die sich parallel zur Bewegungsfläche erstreckt, beispielsweise die Querrichtung und die Längsrichtung. Die vertikale Richtung erstreckt sich orthogonal zu der Bewegungsfläche und somit zur horizontalen Richtung. Die vertikale Richtung kann auch als Höhenrichtung bezeichnet werden.

Es versteht sich, dass der wenigstens eine Mover sowohl während des Fertigungsvorgangs als auch davor und danach bewegbar ist. Mit Fertigungsvorgang wird nachfolgend der Vorgang bezeichnet, bei dem Material auf die Druckfläche aufgetragen wird, um ein Bauteil additiv zu fertigen. Da ein Aufbauen eines Bauteils in Schichten kennzeichnend für additive Fertigung ist, umfasst der Begriff "auf eine Druckfläche auftragen" nicht nur das Auftragen einer ersten Materialschicht direkt auf die Druckfläche, sondern auch das Auftragen weiterer Materialschichten auf eine oder mehrere sich bereits auf der Druckfläche befindliche Materialschicht(en). Gleichermaßen kann die Vorrichtung dafür eingesetzt werden, auf ein sich bereits vor Beginn des Fertigungsvorgangs auf der Druckfläche befindliches Bauteil Material zur Fertigung einer vorbestimmten Form aufzutragen. Auch in diesem Fall trägt die Druckkopfeinheit Material auf eine Druckfläche auf, um ein Bauteil zu fertigen, nämlich auf ein sich auf der Druckfläche befindliches Halbzeug. Dies kann beispielsweise für Reparaturen oder zum Fortsetzen eines unterbrochenen Fertigungsvorgangs von Vorteil sein.

Zudem sei ferner angemerkt, dass die Vorrichtung auf ein und derselben Druckfläche auch eine Mehrzahl von Bauteilen aufbauen kann.

In Weiterbildung der Erfindung wird vorgeschlagen, dass der wenigstens eine Mover relativ zu der Bewegungsfläche sowohl in horizontaler Richtung als auch in vertikaler Richtung bewegbar sein kann. Der mögliche Bewegungsbereich in vertikaler Richtung von derzeit bekannten Magnetschwebetechnologiesystemen ist beschränkt. Die daraus resultierenden beschränkten Abmessungen reichen gleichwohl für bestimmte, eher flächig ausgebildete Bauteile aus. Darüber hinaus sind Systeme in der Entwicklung, die einen größeren Bewegungsbereich in Höhenrichtung des wenigstens einen Movers ermöglichen. Durch den Einsatz derartiger Systeme kann ein Bauteil mit größerer vertikaler Erstreckung gebildet werden.

Grundsätzlich ist es denkbar, dass die Druckkopfeinheit vollkommen starr ist. Für den Fall, dass ein größerer Druckbereich in vertikaler Richtung erforderlich ist, wird vorgeschlagen, dass die Druckkopfeinheit relativ zu der Bewegungsfläche in vertikaler Richtung bewegbar ist. Somit kann der vertikale Druckbereich und damit die vertikale Erstreckung des zu fertigenden Bauteils auf die Summe der maximalen vertikalen Bewegungsabmessung der Druckkopfeinheit und der maximalen vertikalen Bewegungsabmessung des wenigstens einen Movers erhöht werden.

Da die Bewegung des wenigstens einen Movers in horizontaler Richtung keiner Einschränkung unterliegt, kann die Konstruktion weiter vereinfacht werden, wenn die Druckkopfeinheit relativ zu der Bewegungsfläche nur in vertikaler Richtung bewegbar ist. Somit werden die Wandungen des zu fertigenden Bauteils durch Bewegung des wenigstens einen Movers relativ zu der Druckkopfeinheit während des Auftragens des Materials auf die Druckfläche erzeugt.

Bei herkömmlichen Vorrichtungen für die additive Fertigung ist es nach jedem Druckvorgang erforderlich, die Vorrichtung zu justieren. Im Rahmen des Justiervorgangs wird die Druckkopfeinheit in horizontaler Richtung über die Druckfläche verfahren und der Abstand zwischen der Druckfläche und der Druckkopfeinheit in vertikaler Richtung so eingestellt, dass der Abstand zwischen der Druckfläche und der Druckkopfeinheit über die gesamte Druckfläche gleich ist. Damit dieser zeitaufwändige Justiervorgang entfallen kann, kann eine Steuereinheit vorgesehen sein, die dazu eingerichtet ist, neben der Bewegung des wenigstens einen Movers in horizontaler Richtung sowohl die Bewegung des wenigstens einen Movers in vertikaler Richtung als auch die Bewegung der Druckkopfeinheit in vertikaler Richtung anzusteuern. Mit anderen Worten kann eine Steuereinheit vorgesehen sein, die dazu eingerichtet ist, neben der Horizontalbewegung des wenigstens einen Movers sowohl die Vertikalbewegung des wenigstens einen Movers als auch die Vertikalbewegung der Druckkopfeinheit anzusteuern. Somit kann auf einfache Weise durch die Steuereinheit sichergestellt werden, dass der Abstand zwischen der sich auf dem Mover befindlichen Druckfläche und der Druckkopfeinheit stets gleich ist. Auch gegebenenfalls auftretende Unebenheiten der Druckfläche können durch die gemeinsame Steuereinheit von Mover und Druckkopfeinheit ausgeglichen werden.

Aus dem Stand der Technik bekannte Druckkopfeinheiten mit mechanischer Höhenverstellung mittels Spindelantrieb weisen zwar einen großen vertikalen Druckbereich, aber lediglich eine geringe Genauigkeit der Höhenverstellung auf. Beispielsweise wird in der Praxis eine Höhenverstellung mit einer Auflösung in vertikaler Richtung von 10 bis 20 µm eingesetzt, wobei realistisch eine Abstufung der Verstellbarkeit von 50 µm verwendet wird. Die Genauigkeit der magnetischen Höhenverstellung des wenigstens einen Movers auf der Bewegungsfläche unter Verwendung von Magnetschwebetechnologie ist hingegen deutlich besser, nämlich beispielsweise in einer Größenordnung von 2 µm.

An dieser Stelle sei angemerkt, dass der wenigstens eine Mover eine Mehrzahl an Dauermagneten aufweist, vorzugsweise vier Dauermagneten an den Ecken und einen fünften Dauermagneten im Zentrum. Demgegenüber weist die Statoranordnung Elektromagneten auf, über die die Statoranordnung ein Magnetfeld erzeugt, um die Position sowie gegebenenfalls die Bewegung des wenigstens einen Movers in horizontale und vertikale Richtung anzusteuern. Die Vertikalbewegung des wenigstens einen Movers wird durch die Stärke des Magnetfelds der Statoranordnung gesteuert.

Da die Steuereinheit dazu eingerichtet ist, sowohl die Vertikalbewegung des wenigstens einen Movers als auch die Vertikalbewegung der Druckkopfeinheit anzusteuern, können die Einschränkungen der magnetischen Verstellung des wenigstens einen Movers bezüglich des Höhenbereichs durch den großen vertikalen Verstellbereich der mechanisch verstellbaren Druckkopfeinheit ausgeglichen werden. Gleichzeitig kann die geringe Genauigkeit der Mechanik der Höhenverstellung der Druckkopfeinheit durch die hohe Genauigkeit der Magnetschwebetechnologie, insbesondere in vertikaler Richtung, kompensiert werden.

Indem die Steuereinheit dazu eingerichtet ist, die Bewegung des wenigstens einen Movers in horizontaler und vertikaler Richtung sowie die vertikale Bewegung der Druckkopfeinheit anzusteuern, können die Bewegungen des wenigstens einen Movers und der Druckkopfeinheit aufeinander abgestimmt, vorzugsweise synchronisiert, werden. Somit ist ein Justieren der Druckkopfeinheit nicht mehr nach jedem Druckvorgang und/oder jedem Wechsel der Druckfläche erforderlich. Vielmehr sind eine Mehrzahl von Druckvorgängen ohne Zwischenjustierung der Druckkopfeinheit möglich. Das Justieren der Druckkopfeinheit kann auf vorbestimmte Zeitintervalle reduziert werden.

Ferner kann die Steuereinheit dazu eingerichtet sein, die Bewegung der Drucckopfeinheit in horizontaler Richtung anzusteuern, sofern die Druckkopfeinheit in horizontaler Richtung bewegbar ist.

Bei konventionellen Vorrichtungen zur additiven Fertigung eines Bauteils ist die Druckfläche auf einer Druckplatte angeordnet, die manuell nach dem Druck gewechselt werden muss. Dieser Wechsel ist mit langen Stillstandzeiten und hohem Handlingsaufwand verbunden. Insbesondere bei der Serienfertigung von Bauteilen kann die Vorrichtung daher nicht in zufriedenstellendem Maße ausgelastet werden. Für ein leichteres und schnelleres Wechseln der Druckfläche und zum Reduzieren der Stillstandzeiten kann eine Mehrzahl von Movern vorgesehen sein.

Während des Fertigungsvorgangs baut die Druckkopfeinheit ein Bauteil auf der Druckfläche eines ersten Movers auf. Der erste Mover befindet sich während des Fertigungsvorgangs in einem Druckbereich auf der Bewegungsfläche. Ist der Fertigungsvorgang abgeschlossen, oder wird der Fertigungsvorgang abgebrochen, bewegt sich der erste Mover aus dem Druckbereich heraus, und begibt sich beispielsweise in eine Abgabeposition, die sich ebenfalls auf der Bewegungsfläche befinden kann. Das sich auf dem ersten Mover befindende Bauteil kann, nachdem sich der Mover aus dem Druckbereich bewegt hat, von dem ersten Mover abgenommen werden und einem weiteren Prozessschritt, beispielsweise einem Nacharbeitsschritt oder einem Verpackungsschritt, zugeführt werden.

Während sich der erste Mover aus dem Druckbereich bewegt, kann sich ein weiterer Mover, vorzugsweise mit einer bauteilfreien Druckfläche, in den Druckbereich bewegen. Sobald sich der weitere Mover in dem Druckbereich befindet, kann die Druckkopfeinheit ein Bauteil auf der Druckfläche des weiteren Movers fertigen.

Die Bewegung des ersten Movers aus dem Druckbereich heraus und die Bewegung des weiteren Movers in den Druckbereich hinein können aufeinander abgestimmt, vorzugsweise synchron, erfolgen. Folglich entfällt der manuelle Aufwand des Wechselns der Druckfläche und es können beliebig viele Bauteile automatisiert hintereinander gefertigt werden.

Nachzutragen ist an dieser Stelle noch, dass Mover mit unterschiedlichen Abmessungen und/oder Mover mit Druckflächen aus jeweils unterschiedlichen Materialien vorgesehen sein können, ohne dass ein Wechsel der Druckfläche zu hohen Stillstandzeiten führt. Es wird somit die nicht-wertschöpfende Zeit reduziert und die Durchsatzrate kann erhöht werden.

Auch große Bauteile, die sich über zwei oder mehr Mover erstrecken, können problemlos gefertigt werden. Hierzu kann eine starre Druckplatte vorgesehen sein, die sich über eine Mehrzahl von Movern erstreckt.

Für das Fertigen des Bauteils wird das Material üblicherweise erwärmt und anschließend von der Druckkopfeinheit auf die Druckfläche aufgetragen. Um eine höhere Bauteilqualität zu erreichen, wird vorgeschlagen, dass der wenigstens eine Mover eine zur Erwärmung der Druckfläche bestimmte Heizeinheit aufweist. Hierdurch wird der wenigstens eine Mover erwärmt und somit auch die Druckfläche. Gelangt nun das erwärmte Material auf die ebenfalls erwärmte Druckfläche, wird ein zu schnelles Abkühlen oder gar ein Temperaturschock des Materials vermieden werden.

In Weiterbildung der Erfindung wird vorgeschlagen, dass die Heizeinheit eine Spule und einen mit der Spule in Reihe geschalteten Heizwiderstand umfasst. Die Statoranordnung kann dazu geeignet sein, neben einem Magnetfeld für die Bewegung und/oder Positionierung des wenigstens einen Movers, auch eine zeitlich variierende Magnetfeldkomponente für die Erwärmung der Druckfläche zu erzeugen (zusätzliches Magnetfeld). Das von der Statoranordnung erzeugte zusätzliche Magnetfeld induziert in der Spule eine Leistung, die wiederum in bekannter Weise an dem mit der Spule in Reihe geschalteten Heizwiderstand in Form von Wärmeenergie abfällt. Hierzu ist die Spule aus leitfähigem Material hergestellt, beispielsweise Kupfer. Durch diesen Aufbau der Heizeinheit ist für die Erwärmung der Druckfläche keine gesonderte Stromzufuhr notwendig.

Grundsätzlich können sowohl das Magnetfeld für die Bewegung und/oder Positionierung des wenigstens einen Movers als auch das zusätzliche Magnetfeld für die Erwärmung der Druckfläche gleichzeitig von der Statoranordnung erzeugt und der Steuereinheit gesteuert werden. Damit die Bewegung des wenigstens einen Movers jedoch nicht durch das zusätzliche Magnetfeld zur Erwärmung der Druckfläche beeinflusst wird, kann die Steuereinheit dazu eingerichtet sein, den Einfluss des zusätzlichen Magnetfelds auf die die Bewegung und/oder Position des wenigstens einen Movers bei der Erzeugung der beiden Magnetfelder zu berücksichtigen. Beispielsweise kann die Steuereinheit die Frequenzbereiche zum Ansteuern der Bewegung und/oder Positionierung des wenigstens einen Movers und zum Ansteuern der Erwärmung der Druckfläche so wählen, dass die Bewegung und/oder Position des wenigstens einen Movers nicht durch das zusätzliche Magnetfeld für die Erwärmung der Druckfläche beeinflusst wird. Ferner kann die Steuereinheit dazu geeignet sein, das Magnetfeld der Statoranordnung so zu variieren, dass eine vordefinierte Temperatur auf der Druckfläche eingestellt wird und sich der wenigstens eine Mover in eine vordefinierte Position bewegt oder in einer vordefinierten Position gehalten wird.

Für die Einstellung der Temperatur auf einen Soll-Wert kann die Vorrichtung ferner einen Temperatursensor aufweisen. Der Temperatursensor kann mit einer Temperaturregeleinheit über eine elektronische Leitung verbunden sein. Alternativ können der Temperatursensor und die Temperaturregeleinheit jedoch auch mittels einer Funkverbindung miteinander verbunden sind. Gemäß einer weiteren Alternative kann der Temperatursensor als Infrarotkamera ausgebildet sein. Vorteilhafterweise umfasst die Steuereinheit die Temperaturregeleinheit.

Insbesondere für eine hohe Bauteilqualität ist es wichtig, dass der Bauteilfertigungsvorgang in einem Raum möglichst ohne Kaltzonen durchgeführt wird. Um eine aufwändige Klimatisierung des gesamten Bereichs, in dem die Vorrichtung aufgestellt ist, beispielsweise einer Fertigungshalle, zu vermeiden, kann ein Druckraumgehäuse vorgesehen sein, das die Druckkopfeinheit und den wenigstens einen Mover umhüllt. Hierdurch wird die Temperaturregelung, insbesondere die präzise Temperaturregelung, vereinfacht. Gleichzeitig kann der Energiebedarf gering gehalten werden, da das Volumen des Druckraumgehäuses kleiner ist als das Volumen des gesamten Bereichs, in dem die Vorrichtung aufgestellt ist. Ein temperaturreguliertes Druckraumgehäuse ermöglicht zudem, das Materialspektrum für die additive Herstellung des Bauteils zu vergrößern.

Vor dem Hintergrund, dass der Schwerpunkt der Erfindung der Aufbau der Vorrichtung und die Bewegung der Druckkopfeinheit ist, sei an dieser Stelle nachgetragen, dass für die Fertigung des Bauteils Standarddruckverfahren, insbesondere Filamentextrusionsverfahren oder Jettingverfahren, eingesetzt werden können. Somit können alle üblichen extrudierbaren oder sprühbaren Werkstoffe, beispielsweise Kunststoffe, insbesondere thermoplastische Kunststoffe, für die Fertigung des Bauteils eingesetzt werden.

Die Erfindung wird im Folgenden anhand eines Ausführungsbeispiels mit Bezug auf die begleitenden Zeichnungen näher erläutert werden.

Es stellt dar:
- Figur 1: eine perspektivische Ansicht einer erfindungsgemäßen Vorrichtung, und
- Figur 2: eine Querschnittsansicht durch die Vorrichtung aus Figur 1 entlang der Linie I-I.

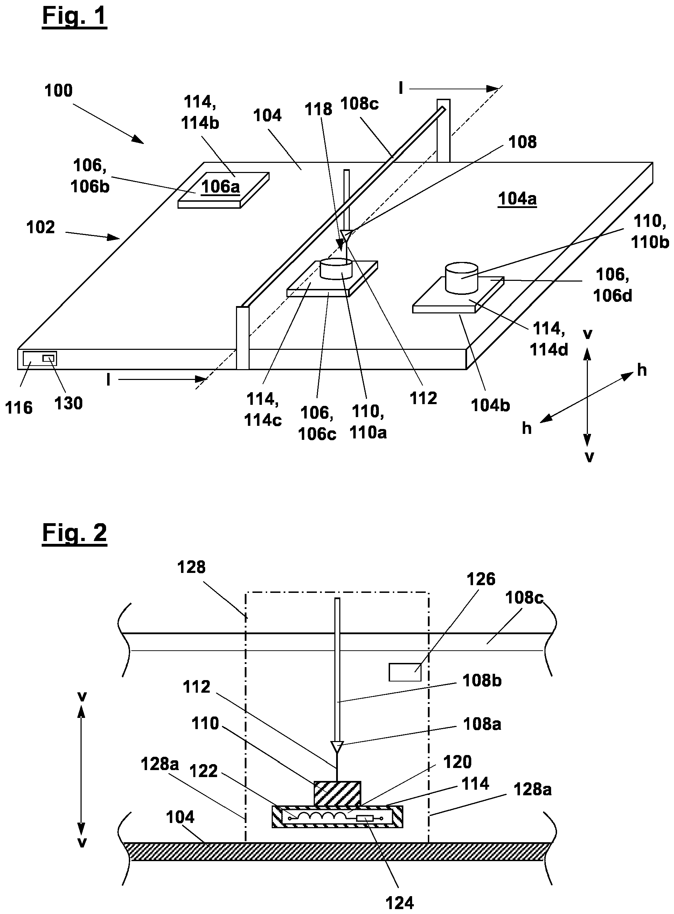

In Figur 1 ist eine Vorrichtung zur additiven Fertigung eines Bauteils ganz allgemein mit 100 bezeichnet. Die Vorrichtung 100 umfasst eine in Magnetschwebetechnologie ausgebildete Druckbetteinheit 102 mit einer Statoranordnung 104 und wenigstens einem Mover 106 (hier drei Mover 106). Die Statoranordnung 104 weist eine Bewegungsfläche 104a auf, relativ zu der die Mover 106 bewegbar sind.

Jeder der Mover 106 kann sich parallel zu der Bewegungsfläche 104a in horizontaler Richtung h sowie orthogonal zu der Bewegungsfläche 104a in vertikaler Richtung v bewegen.

Ferner umfasst die Vorrichtung 100 eine (lediglich grobschematisch angedeutete) Druckkopfeinheit 108, die dazu eingerichtet ist, ein zur Bildung eines Bauteils 110 bestimmtes Material 112 auf eine Druckfläche 114 aufzutragen. Die Druckfläche 114 ist auf einer der Druckkopfeinheit 108 zugewandten Oberfläche 106a des Movers 106 ausgebildet, wie in Figur 1 exemplarisch für einen der Mover 106 dargestellt.

Obwohl die erfindungsgemäße Vorrichtung auch dafür eingesetzt werden kann, Material auf ein sich bereits vor Beginn des additiven Fertigungsvorgangs auf der Druckfläche 114 befindliches Bauteil oder Halbzeug aufzutragen, wird die Funktionsweise der Vorrichtung 100 zum einfacheren Verständnis nachfolgend am Beispiel der Fertigung eines Bauteils auf einer zu Beginn des Fertigungsvorgangs bauteilfreien Druckfläche 114 erläutert werden.

Um Material 112 auf die Druckfläche 114 aufzutragen und ein Bauteil 110 zu fertigen, weist die Druckkopfeinheit 108 einen Druckkopf 108a auf (siehe Figur 2). Das Material 112 wird vor dem Auftragen auf die Druckfläche 114 und/oder das Bauteil 110 in der Druckkopfeinheit 108 erwärmt. Durch den Druckkopf 108a wird das erwärmte Material 112, beispielsweise thermoplastischer Kunststoff, auf die Druckfläche 114 aufgetragen. Nachdem eine erste Schicht Material 112 auf der Druckfläche 114 aufgetragen ist, bewegt sich die Druckkopfeinheit 108 in vertikaler Richtung v von der Druckfläche 114 weg. Hierzu ist die Druckkopfeinheit 108 in vertikaler Richtung v relativ zu der Bewegungsfläche 104a bewegbar. Gemäß dem exemplarisch beschriebenen Ausführungsbeispiel ist die Druckkopfeinheit 108 lediglich in vertikaler Richtung v relativ zu der Bewegungsfläche 104a bewegbar. Alternativ oder zusätzlich kann sich der wenigstens eine Mover 106, auf dessen Oberfläche das Bauteil 110 gefertigt wird, in vertikaler Richtung v von der Drucckopfeinheit 108 weg und auf die Bewegungsfläche 104a zu bewegen. Der wenigstens eine Mover 106 und/oder die Druckkopfeinheit 108 können sich während des Fertigungsvorgangs wiederholt in vertikaler Richtung aufeinander zu und voneinander weg bewegen.

Für eine aufeinander abgestimmte Bewegung des wenigstens einen Movers 106 und der Druckkopfeinheit 108 ist ferner eine Steuereinheit 116 vorgesehen, die in Figur 1 lediglich schematisch dargestellt ist. Die Steuereinheit 116 ist dazu eingerichtet, sowohl die Bewegung des Movers 106 in horizontaler Richtung h, als auch die Bewegung des Movers 106 in vertikaler Richtung v und die Bewegung der Druckkopfeinheit 108 in vertikaler Richtung v anzusteuern. Durch die Bewegung des Movers 106 in horizontaler Richtung h kann eine Schicht des Bauteils 110 in einer Ebene parallel zur Bewegungsfläche 104a aufgebaut werden. Durch die von der Steuereinheit 116 gesteuerte Bewegungen der Druckkopfeinheit 108 in horizontaler Richtung h und des Movers 106 ebenfalls in horizontaler Richtung h wird die Erstreckung des zu fertigenden Bauteils 110 in Höhenrichtung h festgelegt.

Wie in Figur 2 dargestellt ist, erfolgt die Bewegung der Druckkopfeinheit 108, insbesondere des Druckkopfs 108a, in dem dargestellten Ausführungsbeispiel über eine mechanische Höhenverstelleinheit 108b, beispielsweise einen Spindelmechanismus, der an einer Brücke 108c befestigt ist. Die Brücke 108c kann sich in einem Abstand über die Bewegungsfläche 104a erstrecken.

Wie bereits erwähnt, kann die Vorrichtung 100 eine Mehrzahl von Movern 106 umfassen. In Figur 1 sind drei Mover 106 dargestellt. Ein erster Mover 106b weist eine leere Druckfläche 114b auf. Ein zweiter Mover 106c ist in einem Zustand dargestellt, in dem ein erstes Bauteil 110a durch Auftrag von Material 112 auf der Druckfläche 114c im Rahmen eines Fertigungsvorgangs gefertigt wird. Der zweite Mover 106c befindet sich in dem Druckbereich 118, nämlich dem Bereich, in denen sich ein Mover 106 während der Fertigung des Bauteils durch die Druckkopfeinheit 108 auf seiner Druckfläche 114 befindet. Während des Fertigungsvorgangs baut die Druckkopfeinheit 108 ein erstes Bauteil 110a gemäß der vorangehend beschriebenen Vorgehensweise auf der Druckfläche 114c des Movers 106c, welcher sich im Druckbereich 118 befindet, auf.

Ist der Fertigungsvorgang eines ersten Bauteils 110a abgeschlossen, so bewegt sich der zweite Mover 106c aus dem Druckbereich 118 heraus. Er kann sich auf der Bewegungsfläche 104a in eine Abnahmeposition 104b bewegen, beispielsweise die Position, auf der sich in der Figur 1 ein dritter Mover 106d befindet, der auf seiner Druckfläche 114d ein fertiggestelltes Bauteil 110b trägt. In dieser Position kann das fertiggestellte Bauteil 110b von dem Mover 106d entnommen werden und einem nachgelagerten Prozessschritt zugeführt werden.

Während der zweite Mover 106c den Druckbereich 118 mit einem fertiggestellten Bauteil 110b verlässt, kann sich der erste Mover 106b in den Druckbereich 118 bewegen. Wie in Figur 1 exemplarisch dargestellt weist die Druckfläche 114b des ersten Movers 106b noch kein Bauteil auf, sie ist also bauteilfrei.

Der Wechsel eines Movers 106b mit einem gefertigten Bauteil 110 aus dem Druckbereich 118 heraus und eine Bewegung eines ersten Movers 106b mit einer leeren Druckfläche 114b in den Druckbereich 118 hinein, kann nicht nur vollkommen automatisiert, sondern auch zeitgleich durchgeführt werden.

Figur 2 zeigt eine Schnittansicht durch die erfindungsgemäße Vorrichtung 100 in horizontaler Richtung h. Diese Schnittrichtung ist in Figur 1 durch die mit I bezeichneten Pfeile angedeutet.

Damit das von der Druckkopfeinheit 108 erwärmte Material 112 beim Auftragen auf die Druckfläche 114 keinen Temperaturschock erleidet, weist der Mover 106 eine zur Erwärmung der Druckfläche 114 bestimmte Heizeinheit 120 auf. Diese Heizeinheit 120 umfasst eine Spule 122 und eine mit der Spule 122 in Reihe geschalteten Heizwiderstand 124. Aufgrund eines von der Statoranordnung 104 erzeugten Magnetfelds (nicht dargestellt) erzeugt die Spule 122 eine elektrische Leistung, die wiederum als Wärmeenergie von dem Heizwiderstand 124 abfällt. So wird die der Druckkopfeinheit 108 zugewandte Oberfläche 106a des Movers 106 und damit auch die Druckfläche 114 erwärmt.

Die Steuereinheit 116 ist dazu eingerichtet, das von der Statoranordnung 104 erzeugte Magnetfeld, welches gleichermaßen für die Ansteuerung der Bewegung und/oder Positionierung des Movers 106 und der von der Heizeinheit 120 erzeugten Wärme geeignet ist, anzusteuern.

Für eine verbesserte Temperaturregelung weist die Vorrichtung 100 ferner einen Temperatursensor 126 auf, der beispielsweise als Infrarotkamera ausgebildet ist. Der Temperatursensor 126 ist mittels einer Funkverbindung mit einer Temperaturregeleinheit 130 verbunden, die dazu eingerichtet ist, eine Solltemperatur für den Druckbereich 118 einzustellen. Die Temperaturregeleinheit 130 kann in der Steuereinheit 116 umfasst sein.

Zur Reduzierung des zu klimatisierenden Bereichs weist die Vorrichtung 100 ferner ein Druckraumgehäuse 128 (in Figur 2 strichpunktiert dargestellt) auf. Das Druckraumgehäuse 128 umhüllt die Druckkopfeinheit 108 und den Mover 106, welcher sich im Druckbereich 118 befindet. Ferner ist der Temperatursensor 126 in dem Druckraumgehäuse 128 angeordnet. In dem Druckraumgehäuse 128 kann eine Soll-Temperatur eingestellt werden. Hierdurch kann das Spektrum von Materialien für den Aufbau des Bauteils 110 vergrößert werden.

Um einen Wärmeverlust zu vermeiden und gleichzeitig den automatischen Wechsel von Movern 106 aus bzw. in den Druckbereich 118 hinein nicht zu behindern, können an zwei einander gegenüberliegenden Seiten 128a des Druckraumgehäuses 128 sich öffnende und schließende Öffnungen angebracht sein. Vorzugsweise befinden sich die Öffnungen 128a während des Fertigungsvorgangs in einem geschlossenen Zustand, so dass die Temperaturregulierung während des Fertigens zielgerichtet durchgeführt werden kann.

Auch wenn nicht dargestellt, können eine Mehrzahl von Movern 106 eine durchgehende Druckfläche 114 aufweisen, so dass Bauteile mit größeren horizontalen Abmessungen gefertigt werden können.

## Patentansprüche

1. Vorrichtung (100) zur additiven Fertigung eines nicht zur Vorrichtung (100) gehörenden Bauteils (110), umfassend
eine in Magnetschwebetechnologie ausgebildete Druckbetteinheit (102) mit einer Statoranordnung (104) und wenigstens einem Mover (106), wobei die Statoranordnung (104) eine Bewegungsfläche (104a) aufweist, relativ zu der der wenigstens eine Mover (106) bewegbar ist, und
eine Druckkopfeinheit (108), die dazu eingerichtet ist, ein zur Bildung des Bauteils (110) bestimmtes Material (112) auf eine Druckfläche (114) aufzutragen
**dadurch gekennzeichnet,**
**dass** die Druckfläche (114) auf einer der Druckkopfeinheit (108) zugewandten Oberfläche (106a) des wenigstens einen Movers (106) ausgebildet ist.

2. Vorrichtung nach Anspruch 1,
**dadurch gekennzeichnet, dass** der wenigstens eine Mover (106) relativ zu der Bewegungsfläche (104a) sowohl in horizontaler Richtung (h) als auch in vertikaler Richtung (v) bewegbar ist.

3. Vorrichtung nach einem der vorangehenden Ansprüche,
**dadurch gekennzeichnet, dass** die Druckkopfeinheit (108) in vertikaler Richtung (v) relativ zu der Bewegungsfläche (104a) bewegbar ist.

4. Vorrichtung nach einem der vorangehenden Ansprüche,
**dadurch gekennzeichnet, dass** die Druckkopfeinheit (108) nur in vertikaler Richtung (v) relativ zu der Bewegungsfläche (104a) bewegbar ist.

5. Vorrichtung nach Anspruch 2 sowie Anspruch 3 oder 4, sofern auf Anspruch 2 rückbezogen,
**dadurch gekennzeichnet, dass** eine Steuereinheit (116) vorgesehen ist, die dazu eingerichtet ist, neben der Bewegung des wenigstens einen Movers (106) in horizontaler Richtung (h) sowohl die Bewegung des wenigstens einen Movers (106) in vertikaler Richtung (v) als auch die Bewegung der Druckkopfeinheit (108) in vertikaler Richtung (v) anzusteuern.

6. Vorrichtung nach einem der vorangehenden Ansprüche,
**dadurch gekennzeichnet, dass** eine Mehrzahl von Movern (106, 106a, 106b, 106c) vorgesehen ist.

7. Vorrichtung nach einem der vorangehenden Ansprüche,
**dadurch gekennzeichnet, dass** der wenigstens eine Mover (106) eine zur Erwärmung der Druckfläche (114) bestimmte Heizeinheit (120) aufweist.

8. Vorrichtung nach Anspruch 7,
**dadurch gekennzeichnet, dass** die Heizeinheit (120) eine Spule (122) und einen mit der Spule (122) in Reihe geschalteten Heizwiderstand (124) umfasst.

9. Vorrichtung nach einem der vorangehenden Ansprüche,
**dadurch gekennzeichnet, dass** die Vorrichtung (100) ferner einen Temperatursensor (126) aufweist.

10. Vorrichtung nach einem der vorangehenden Ansprüche,
**dadurch gekennzeichnet, dass** ein Druckraumgehäuse (128) vorgesehen ist, das die Druckkopfeinheit (108) und den wenigstens einen Mover (106) umhüllt.
